# EUROPEAN PATENT SPECIFICATION

(11) **EP 3 380 247 B1**
(45) Date of publication and mention of the grant of the patent: **28.10.2020**
(21) Application number: 15813144.1
(22) Date of filing: 25.11.2015
(51) Int. Cl.: B05B 11/00, G01F 11/08

(54) **A DISPENSING DEVICE FOR DISPENSING LIQUIDS FROM FLEXIBLE PACKAGING FOR LIQUIDS**
ABGABEVORRICHTUNG ZUR ABGABE VON FLÜSSIGKEITEN AUS EINER FLEXIBLEN VERPACKUNG FÜR FLÜSSIGKEITEN
DISPOSITIF DE DISTRIBUTION POUR LA DISTRIBUTION DE LIQUIDES À PARTIR D'UN EMBALLAGE SOUPLE POUR LIQUIDES

(43) Date of publication of application: 03.10.2018
(73) Proprietor: Iwanejko Electronics, Zdzislaw Iwanejko, 00-159 Warszawa (PL)
(72) Inventor: IWANEJKO, Zdzislaw, 00-159 Warszawa (PL)
(74) Representative: Balinska, Ewa
(86) International application number: PCT/PL2015/050062
(87) International publication number: WO 2017/091091

(56) References cited:
- EP-A1- 1 460 001
- DE-A1- 2 728 965
- FR-A1- 2 659 067
- GB-A- 1 099 514
- JP-A- H0 692 383
- US-A1- 2011 079 614
- US-A1- 2014 076 935

## Description

The invention relates to a dispensing device for dispensing liquids from flexible packaging, in particular for dispensing defined amount of liquid from a flexible packaging in the form of pouches or bags of plastic material, in particular "pouch" type packaging.

Many liquids, used for example in households or at vehicles servicing or other devices for everyday use are currently available on the market in a "pouch" type flexible packaging, also known under the names "doypack" or "cheerpack". Such packaging is regarded in general as refill packaging which implies necessity of cumbersome transferring and pouring out liquid from them to a final packaging or using a special dispenser of a handled device.

There are known devices designed to facilitate dispensing liquid from this type of flexible packaging, in particular in the form of a dispenser that can be combined or attached directly to packaging having a suitable spout, for example as described in U.S. Patent No. 7,850,044B2. The spout according to this embodiment is connected to a flexible container, for example made of a plastic film, and has a certain number of boat-shaped welded flat fin-like ribs around a central neck portion, spaced apart and parallel to each other to stabilize the container during exerting pressure on the container. Tabs projected outwardly are located in the middle fin-like ribs area.

However, most currently used dispensing method is a dispensing measuring container attached to flexible packaging and calibrated with volume defining lines marked on a side wall. It is often a screw cap of a larger container containing liquid to be dispensed. In the case of a "doypack" type flexible packaging this kind of a cap screw cannot be used and therefore companies that produce liquids offer these measuring containers free of charge in a shop (Migros, Switzerland) or deliver them upon request (as for example Werner & Mertz company, the manufacturer of products under the name Frosch), which is associated with some nuisance. DRY Inc. (US) markets ProWash detergent packed in the doypack type packaging provided with adhered measuring element. Additionally, in case of large containers containing 1, 2 or even 4 litres of liquid to be dispensed filling its appropriate amount by watching not to exceed the specific line put on the dispensing container is not easy task, especially for older, weaker persons or ones having poor eyesight.

There are also known other solutions of dispensers adapted to dispense liquid from packaging, for example the solution from Taplast described in Patent No. US 6,672,486B2 in the form of a pump dispenser, which is mounted on an opening of a liquid container by a screw-on plug, in which the dispenser body is mounted defining a suction and a discharge chamber being in fluid communication to a channel for suction a liquid from a container and to a dispensing channel. Valve means to regulate liquid inflow and outflow are provided upstream of the suction channel and downstream of the dispensing channel. A working element is a piston arranged movably, slidable inside a hollow body and cooperating with a flexible bellows element, wherein the bellows element is arranged between the piston and the body and acts as a spring actuating an automatic return movement of the piston, wherein said bellows element has a shape of cylinder or cone and is provided with circumferential ribs arranged on the outer circumference thereof. Said dispenser comprises elements limiting movement of the piston in the form of vertical grooves of different length arranged on the plug and cooperating projections on the piston for setting a dispensing volume of a liquid in three predetermined positions. Accordingly, this type of a pump dispenser is able to dispense only predefined volumes of a liquid. This is achieved by different lengths of the grooves (recesses) whereby movement of said piston of the pump takes place along a defined and predetermined way, that results in dispensing a precise volume of a liquid. The disadvantage of that solution is inability to identify by the user himself, of any dispensed volume of a liquid to be dispensed, since it is only possible to select one of the volumes provided by a manufacturer. Additionally, such dispensing pump is not suitable for applications used for emptying flexible packaging the structure of which is not sufficiently rigid.

It is known a solution from Meadwestvaco Calmar Netherlands BV designed for dispensing liquids from a "pouch" type flexible packaging described in the publication WO2013/074932 in the form of a resilient bellows-actuated pump, fixed to this type packaging. The said device allows dispensing liquid from such packaging, however, there is no possibility to adjust a volume of a liquid to be dispensed. The device is a resilient bellows-actuated dosing pump connected to a flexible packaging of a plastic film by means of a special fastening tool, tightly connected to said packaging and adapted to be connected to a base of a pump body. A resilient bellows is attached to a base of a pump body by a lid and has an upper domed part which is resiliently deformable and side walls defining an inner chamber of said bellows that is in fluid communication to said inner chamber of the base of the pump body which together form the chamber of said pump. Said base of the pump body has at least one inlet channel being in fluid communication with an interior of a flexible packaging and with internal chamber in said pump base while said internal chamber of the pump base has at least one outlet being in fluid communication with an outlet channel of said pump. In a bottom of the pump base a spacer can be positioned, which is used for defining said volume of said internal chamber of the base and further to determine in cooperation with suitably shaped flexible dome of said resilient bellows the volume of said chamber of the pump, and thus the volume of liquid dispensed through the pump.

A connection of the chamber of the pump to the inlet channel and the outlet of the chamber of said pump can be closed and opened by means of flexible side walls of both the bellows and the base of the pump body, or in an alternative embodiment by using one of said ribs of the resilient bellows and cooperating with it rib, belonging to the base of the pump body. That connection to the outlet channel is opened through pressure exerted by a user to the bellows dome and it's deformation which results in opening of the pump chamber outlet and pushing out a liquid volume contained in said chamber. After releasing pressure the bellows dome returns to its original shape, which in turn creates a negative pressure in the chamber of the pump, sufficient for opening connection to the inlet channel of the chamber and sucking in the liquid from the packaging into the pump chamber again. In another embodiment, dosing pump is additionally provided with a valve stem functioning as a valve member moving slideably in the pump chamber and terminated at the inlet channel side with a flexible disk valve for closing and opening connection between the inlet channel and the pump chamber, during exerting and releasing pressure on the bellows dome, respectively. On the other hand, said valve stem is adapted to closing and opening the outlet of the pump chamber, during releasing and exerting pressure on the bellows dome, respectively.

The above-described dispensing device with a flexible bellows as an actuator for starting pumping a liquid has not a structure allowing freely changing a volume of a liquid to be dispensed, i.e. a selected by a user dispensed volume value. During pressing the bellows dome a similar volume of a liquid resulting from the volume of the pump chamber is always dispensed.

Known is also an equipment for dispensing liquids from flexible packaging according to US 2007/0114247, which discloses a device of the type of a manual pump actuated by a resilient bellows, wherein pressing said bellows results in closing an inlet of a liquid from the packaging into a dosing space of said pump and at the same time said liquid outflow, i.e. dosing a predetermined volume of a liquid from said dosing space through an open outlet of the pump. Releasing a pressure will result in sucking in said liquid from the packaging into said dosing space of the pump.
An additional difficulty during dispensing liquids from a flexible packaging is that different companies use different diameters of threads on the outlet nozzles of packaging, making it difficult to manufacture a dispenser matching to said various types of threaded fittings.

Devices known from the above patents for dispensing liquids from flexible packaging are poorly adapted to cooperate with a flexible packaging, which tends to deform during exerting pressure, even a small pressure on them, for example during pressing a flexible bellows to start dispensing a liquid, a difficult operation of said device is caused which does not ensure complete emptying a liquid from said packaging. Other exemplary dispensing devices are known from DE27 28 965 and JP H0692383.

In order to overcome the above mentioned drawbacks of the dispensers known in the art when used for emptying of flexible packaging it has been proposed a dispensing device according to the invention with the characteristics described below.

### Short description of the invention

A dispensing device according to the present invention for dispensing liquids from flexible packaging, in particular for dispensing a defined amount of a liquid from a flexible packaging comprises a device body having generally elongated shape, wherein in said body at its one end, an inlet fitting with an inlet opening is mounted, and at its another end an outlet fitting with an outlet opening is mounted. Said inlet fitting and outlet fittings, preferably, are arranged opposite each other. Wherein the body defines an inner space of the body, preferably in the form of an internal central opening and said body is further provided on its side surface with a connection opening being in fluid communication with said central opening. Further, a resilient bellows is attached in a sealed manner with its open end side to said connection opening, and preferably to a flange outwardly projecting from a side surface of the body and surrounding said connecting opening. Said resilient bellows has generally cylindrical shape and consists of a certain number of folds, preferably in the form of helical coils, that folds are positioned along longitudinal extension of said bellows and wherein said resilient bellows defines inside an inner space of said bellows, which inner space is in fluid communication with said connection opening of the body. An opposite end of said resilient bellows being closed with a bottom, and wherein said folds or helical coils of resilient bellows are adapted to flex under pressure exerted on said bottom in axial direction of said bellows, towards the body.

Said dispensing device is further provided with an assembly for stepless adjustment of a volume of dispensed liquid by means of: stepless setting up a volume of said inner space of said resilient bellows wherein said stepless setting can be performed for each, individual action of dispensing of a liquid, and wherein said assembly for stepless adjustment comprises a control element cooperating with said resilient bellows and arranged on outer side surface of said bellows and/or said fiange, around their outer periphery, at least on a certain section of a length of said resilient bellows and/or said flange. Further, said control element is provided with marks indicating an adjustable volume of a liquid to be dispensed.
Said control element is shaped in the form of an adjusting nut disposed around outer peripheral surface of said resilient bellows, and particularly around outer surface of said helical coils or folds of the bellows.
Said adjusting nut in preferred embodiment is provided with an internal thread, adapted in size to dimensions of helical coils of the bellows for stepless continuous adjustment of a volume of said inner space of the resilient bellows by setting out an appropriate, available number of free coils of said bellows. In embodiment of the invention said adjusting nut is mounted without any possibility of longitudinal displacement relative to outer surface of said resilient bellows and relative to said body, but with possibility for rotation relative to said surface of said resilient bellows about longitudinal axis of said bellows, which axis coincides with the axis of said adjusting nut, and further wherein said internal thread defines a thread projection.

In alternative embodiment that is not according to invention said control element of said assembly for stepless adjustment of a volume is shaped in the form of an adjusting nut disposed around an outer peripheral surface of said flange and/or said resilient bellows, in particular around a certain portion of said outer surface of bellows folds and/or bellows helical coils, which adjusting nut is provided with an internal thread in the form of a guide groove cooperating with a projection located on said flange, which is matching in shape and adapted in size to said internal thread for stepless adjustment of a dosing volume by setting out an appropriate, available number of free folds or helical coils of said resilient bellows and having possibility of flexing under axial pressure exerted on said bottom towards said body, and wherein said adjusting nut is mounted with- possibility of longitudinal displacement relative to said outer surface of said resilient bellows and relative to said body and simultaneously with possibility for rotation relative to said surface of said resilient bellows about the longitudinal axis of said bellows, which axis coincides with the axis of said adjusting nut.

Both said internal threads of said adjusting nut comprise only one thread turn, preferably one incomplete thread turn extending about less than full 360° circumference.

The dispensing device according to further embodiment of the invention has said inlet fitting and outlet fitting provided with catch elements extending in the direction of the axis of said connection opening, from their respective bottom surfaces facing that side of the body, on which said connection opening is arranged, surrounded with said flange fixedly attached to the body. Said catch elements can be so shaped as to be located at a distance from both, a side surface of the body facing towards them and a surface of said flange, so that a receiving space is defined. Preferably, said catch elements are formed for arresting axial sliding displacement of said adjusting nut relative to the body.
In further embodiment an adjustment space can be formed between a front surface of said outer flange of the body and said thread projection of said internal thread of said adjusting nut for accommodating a portion of said helical coils number, forming said folds of said resilient bellows during rotation of said adjusting nut.
Further, valve elements, preferably in the form of inlet valve and outlet valve can be provided in said connecting opening of the body.
In further one embodiment of the invention a recess is formed in a side surface wall of the body, opposite to said connection opening, said recess is formed having walls inclined at an angle and converging towards inside, for example forming a V-shape in cross-section. Said walls of said recess divide said inner space of the body into two separate sections constituting two adjacent partial openings, one of which is connected to the inlet fitting and is in fluid communication with its inlet opening on the one hand, and on the other hand it is connected through said valve element located in a part of said connecting opening to said inner space of the resilient bellows, while the second of which partial openings is in fluid communication with discharging opening of said discharging fitting on the one hand, and on the other hand through said outlet valve with said inner space of the resilient bellows.

Outer surface of said control element, preferably in the form of said adjusting nut is provided with a suitable scale indicating a volume to be set and dosed in specified units, preferably in millilitres (ml), wherein in addition an auxiliary marks are preferably applied to individual folds or coils of said resilient bellows. Additional indications can be also applied on outer surface of said resilient bellows or said flange.
According to the invention another embodiment the resilient bellows is a bellows formed as a body of revolution, preferably with a cylindrical contour and a constant diameter and having lateral outer surface in the form of folds formed, preferably, in the shape of helical coils and/or alternatively circular folds.
Said adjusting nut can be provided with an internal thread or demonstrates self-locking with respect to rotational movement relative to said resilient bellows and/or said flange, and particularly relative to said bellows folds and/or coils, which self-locking is obtained by means of selection of appropriate materials for both said cooperating elements, or by means of shape- and dimensional coupling of those elements.

A dispensing device according to the present invention solves the problem to ensure dispensing of any user-selected volume of a liquid from a flexible packaging that can be freely selected by a user, and allows an adjustment of any desirable liquid volume or its mass to be dispensed, which volume or mass can be set freely and immediately before said dispensing operation by a user himself, wherein an amount of a volume to be dispensed can be adjusted substantially smoothly, that means stepless.

The device according to the invention is particularly suitable for cooperation with a flexible packaging having low shape stability and having a wide variety of their sizes and shapes, which allows device complete emptying of a liquid from said packaging while simultaneously preventing liquid dripping from a dispenser after dispensing is finished. It can be moreover readily adapted to different outlets, including outlet ports or outlet nozzles of flexible packaging or bags.

### Description of drawings

In the accompanying drawings preferred embodiments of the dispensing device according to the invention are presented, which are for illustrative purpose only and which do not limit a scope of the invention. The figures of the drawings show, respectively:
Figs. 1a and 1b - the dispensing device according to the invention in its dispensing position connected to a packaging placed in a holder or on a suitable catch, schematically;
Fig. 1c - perspective view of an embodiment of the inventive dispensing device;
Figs. 2a-2c - the dispensing device in the first embodiment according to the invention, in different working positions, in axial section;
Fig. 3 - front view of a control element in the form of an adjusting nut according to the invention;
Fig. 4 - schematic view of valves located in a connection opening according to the second embodiment of the invention as seen from a device body side;
Figs. 5a-5d - the dispensing device in the second embodiment according to the invention in different working positions, in axial section;
Figs. 6a-6c - the dispensing device in the third embodiment not according to the invention in different working positions, in axial section.

### Description of preferred embodiments

To ensure optimum emptying of a flexible packaging it is proposed according to the invention that said packaging is disposed in such a manner that its spout, i.e. its pouring opening, is directed downwardly, so that a liquid may freely outflow from the packaging under an influence of the gravity. In this situation, however, it is necessary to apply an additional valve, which would stop outflow of a liquid from said dispenser and its dripping after finishing of dispensing process.

The dispensing device according to the invention is designed for cooperation with any type of flexible packaging, for example, a "pouch", "doypack", "cheerpack" type having a spout, in which the liquid content can outflow by influence of a gravity force.

The dispensing device according to the invention can also be used to dispense a liquid from flexible lines, which are under substantially constant pressure of said liquid. In this case the device comprises a valve assembly provided with a resilient element, wherein said resilient element, for example a valve spring, has to be matched to a predetermined pressure and fulfil the following relation:
pressure differential of a pressure in a conduit (cp) and a pressure (czᵢₙₗₑₜ) at which an inlet valve opens is less than the pressure (czₒᵤₜₗₑₜ) at which an outlet valve opens, for example, a "Duckbill" type or dome valve, as follows:
(cp) - (czᵢₙₗₑₜ) < (czₒᵤₜₗₑₜ)

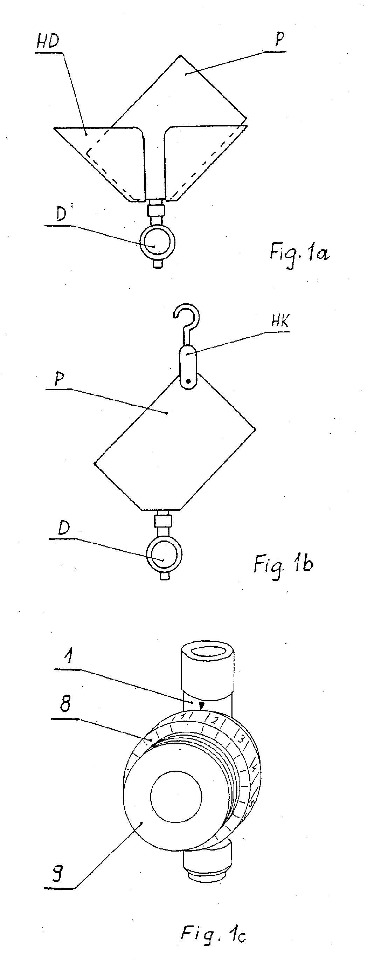

To ensure an outflow of liquid and complete emptying of a packaging, said flexible packaging, for example a "doypack" type, is placed such that its spout is directed downwardly. For this purpose, a special grip of a "doypack holder" type is used, available under the trade brand "teemer" shown in Fig. 1a or alternatively, if a flexible packaging, for example a "doypack" type, is provided with a hanging hole positioned opposite a packaging spout of said packaging it can be hanged with that hole on a special rack, as shown for example in Fig. 1b, or on a suitable hook.

Figs. 1a and 1b show exemplary solutions according to the invention, wherein a flexible packaging P, preferably in the form of a sachet or container of a "doypack" or "cheerpack" type (Fig. 1a) is arranged in such a way that its outlet nozzle, hereinafter also referred to as "spout", is facing downwardly, in a holder HP provided with a suitable opening in which an outlet nozzle or the spout of the flexible packaging, for example a "doypack" type is located. Fig. 1b shows attaching method of a flexible packaging provided with a respective hole for hanging, located on its side opposite to the spout, by which hole the packaging is hanged on a suitable catch HK, for example in the form of a hook. A spout of a flexible packaging P is connected directly or via a suitable adapter to the dispensing device D according to the invention.

The dispensing device D according to the first embodiment of the invention, as well as according to further embodiments of the invention described herein and covered by the protection scope of the invention, comprises a device body 1 made, for example, of plastic material or hardened resin, which is fixed directly or via an adapter device i.e. an adapter, to a nozzle or spout, i.e. an outlet opening, of a flexible packaging P, for example "doypack" type. The body 1 in the preferred embodiment according to the invention can have a generally cylindrical shape and is formed with a flange on its side wall for fixing a resilient bellows and with two, preferably located opposite to each other and substantially perpendicularly to an axis of said flange, inlet and outlet openings with nozzles which are positioned preferably on other surfaces of the body 1, for example, defining basis walls of its cylindrical shape, wherein said inlet and outlet nozzles can be integrated into one continuous elongated element, preferably tubular.

The device body 1 according to the first embodiment is made in the form of a substantially cylindrical element, which limits inside its outer surface an inner space 1a, preferably in the form of an inner opening 1a, and particularly preferably in the form of a tubular member, wherein said cylindrical body is provided with an inlet fitting and outlet fitting, enclosing an inlet nozzle and an outlet nozzle, which nozzles are preferably arranged opposite to each other. A resilient bellows 9 is attached to one side wall of the body 1, while said inlet and outlet nozzles formed by the inlet and outlet fittings, respectively, which can have a form of a tubular members with a hole running through its entire length, are generally arranged on another side walls of the body 1. In one preferred embodiment they are arranged, opposite each other in such a way that they do not disturb rotation of an adjusting member 8, preferably, in the form of an adjusting nut 8. On one side of the body 1, in its inner space 1a, preferably in the form of through opening 1a, an inlet fitting 2 is attached defining an inlet opening which is adapted to be connected directly or via an additional adapter to said spout of a flexible packaging P. The inlet fitting 2 has an internal bore forming inlet opening 2a being in fluid communication with the internal through opening 1a, which forms an inner space 1a of the body 1, via a valve element 6 and an inlet slot open to the outside, in a preferred embodiment a threaded inlet slot. At the other end, or on the other side wall, of said internal opening 1a of the body an outlet fitting 3 is attached forming an outlet nozzle with an outlet opening 3a, preferably axial nozzle, has a shape matching a shape of a body slot to be placed in said body slot adapted to this in such a way that said internal opening 1a of the body is in fluid communication via a valve element 4 to an outlet opening 3a. On one side wall of the body 1, preferably substantially perpendicular to the sides on which the inlet and outlet fittings are arranged, on its side surface there is located, preferably centrally, a connection opening 11, surrounded by a flange 1c projecting outwardly from a surface of the said side wall of the body 1, wherein the axis of said connection opening 11 is approximately perpendicular to an axis of the inner space 1a, which is an internal opening 1a of the body 1. Both inlet fitting 2 and outlet fitting 3 are non-slidable and non-rotatable mounted in the body 1 by means of known suitable fixing means such as forced fixing or interference fit, gluing, welding or by a screw connection or another similar means, wherein preferably the inlet fitting 2 may be replaceable element to adapt it to a shape and dimensions of a respective cooperating spout thread of a packaging P. In other embodiments, in some cases, a threaded portion of the inlet fitting may be in the form of a movable screw cap to facilitate screwing down.

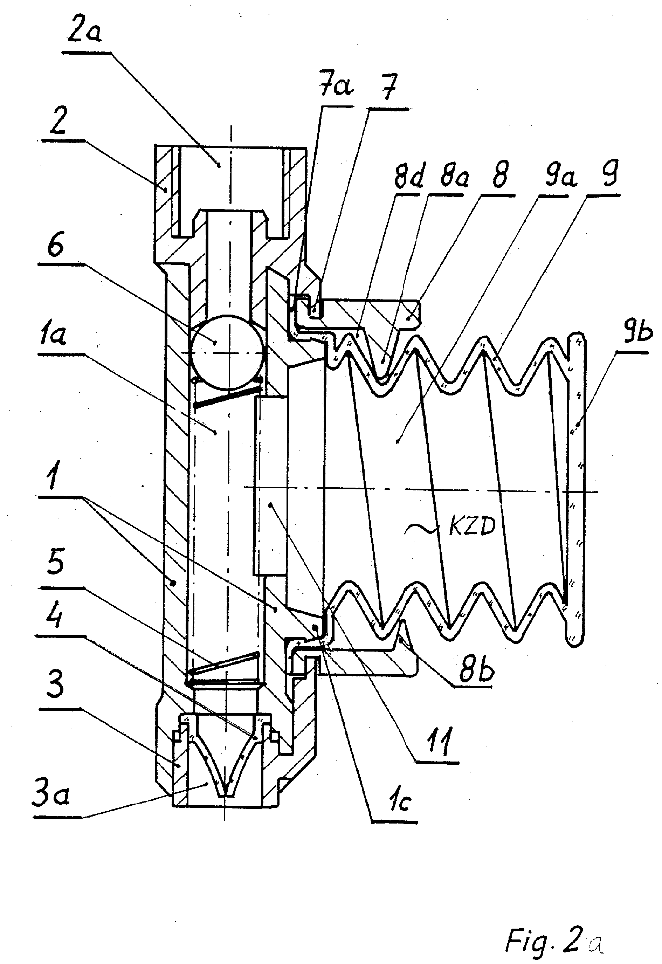

In the first embodiment of the invention both the inlet and outlet fittings 2 and 3 are further provided with catch elements 7 projecting towards an axis of the connection opening 11 from respective basis surfaces of said fittings 2 and 3 arranged on that side of the body 1, within which said connection opening 11 is located and surrounded with said flange 1c as shown in Figs. 2a-2c, wherein said catch elements 7 are so shaped as to be located at a distance, both from the surface of the side wall of the body 1 facing them and from the surface of the flange 1c, thereby limiting, in a preferred embodiment, a receiving space 7a. Said receiving space 7a is defined between said outer surface of the flange 1c, a surface of the side wall of the body 1 on which the flange 1c is arranged and an inner side of said catch elements 7.

The resilient bellows 9 made of elastic and flexible material such as, for example, LDPE, polypropylene, thermoplastic elastomer or rubber is tightly attached to the body 1 in an area of the connection opening 11 in such a way to close said connection opening 11. The resilient bellows 9 is formed with its side wall surface having generally cylindrical outer contour and comprising folds F of the resilient bellows. In the preferred embodiment said folds F are in the form of helical coils forming said folds, wherein the resilient bellows has at least one such coil or fold forming its side surface, and preferably said bellows 9 has more than two, in particular, several bellows folds or coils which are screw-shaped and defining an inner hollow space 9a of said bellows. Said inner hollow space 9a is closed on one side by a bottom 9b of the bellows 9, while on the other side it is connected to the connection opening 11 of the body 1, wherein from the side opposite to said bottom 9b, the resilient bellows 9 is tightly attached to the cylindrical body 1, in particular to the flange 1c of the body 1 and its position relative to the body 1 is fixed, e.g. by pulling on, gluing or welding or other known method.

The end of the resilient bellows 9 opposite to the connection opening 11 is closed by a flat bottom base in a form of a bottom 9b of a bellows. The inner space 9a of said bellows 9 is in fluid communication through connection opening 11 with an inner space 1a, defined preferably by said inner opening 1a of the body 1, forming together a dosing chamber KDZ having a determined volume, wherein said volume may be further substantially smoothly and stepless adjustable by setting an inner volume of the inner space 9a of the bellows 9.

In the basic constructional version the resilient bellows 9 has a predetermined volume, preferably marked on said bottom 9b of the bellows, which bottom is simultaneously a pressing place, i.e. defines a surface on which pressure in an axial direction of the bellows and directed towards the body is applied by a user during dispensing. In such a case, each pressing results in an outflow of a predefined amount of a liquid to be dispensed from an outlet fitting 3a.

In another embodiment, being structurally more advanced and versatile variant of the invention, it is possible to change a metered volume of a liquid by dispensing device according to the invention, for example, in the first embodiment said change is performed by changing a useful volume of the resilient bellows 9, and particularly a volume of its inner space 9a, and thus a volume of said dosing chamber KDZ of the device according to the invention, that is conducted by means of an assembly for stepless, smooth adjustment of a volume of a liquid to be dispensed. In this embodiment, by adjusting a volume of an inner space 9a of the resilient bellows 9. In the first embodiment, said assembly for stepless adjustment cooperates with folds F of the resilient bellows 9, preferably in the form of helical coils Z constituting said resilient bellows 9, and comprises an adjustment or a control element 8, which element surrounds from the outside a side wall surface of the bellows 9 at least on a certain part of its length.

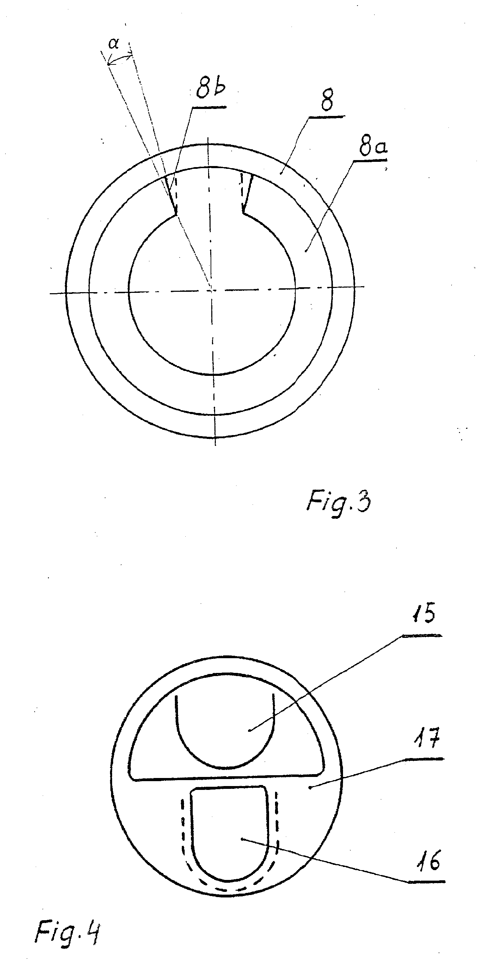

Such adjustment element of an assembly for smooth adjustment of a volume according to the preferred embodiment of the invention is in the form of an adjusting nut 8 placed on the resilient bellows 9 and arranged around its outer circumference, which adjusting nut 8 is preferably made by injection moulding of plastic material, preferably of a thermoplastic material such as PA, PP, ABS, POM-C, PET and it is provided with an internal thread 8a dimensionally adapted to a shape and dimensions of the helical coils Z of the bellows 9. The adjusting nut 8 is secured around an outer periphery of the resilient bellows 9 with possibility for rotation relative to the bellows 9, which is fixed to the body 1 but in the first embodiment said nut 8 has no possibility of longitudinal displacement in axial direction relative to the bellows. Such displacement or axial shifting of the adjusting nut 8 is prevented by said catch elements 7, preferably in the form of projections or projecting elements projecting from inlet fitting 2 and outlet fitting 3, as discussed above, wherein, in this embodiment, on its one end side, the adjusting nut 8 is mounted and locked against shift movement in a receiving space 7a formed by said catch elements 7. Internal thread 8a of the adjusting nut 8 includes, in embodiment of the invention, only one turn, preferably, incomplete thread turn, that means a turn extending about less than 360°. Wherein at the beginning portion of an internal thread 8a of the adjusting nut 8 viewed from front side of the nut the thread 8a begins with a radial offset. Said radial offset prevents flexing of the resilient bellows 9 and more particularly its coils Z during rotations i.e. turning the adjusting nut 8 around relative the resilient bellows 9 and it enables smooth rotations of the adjusting nut 8 without jamming. The radial offset has inclined surfaces of its sides, that means end surfaces of a profile of its thread, and can be determined by an offset angle α, which is an angle defined between the line passing through the geometric centre of central axial opening of the adjusting nut 8 and a line running tangentially to said inclined end surface of a profile of the inner thread 8a, as shown in fig. 3. In the preferred embodiment, the offset angle α is in the range from about -30° to 45°, in particular from -30° to 30°, preferably in the range from -15° to 15°, and particularly preferably about 10°.

An angle of the inner thread 8a inclination is in a preferred embodiment approximately close to the angle of symmetric trapezoidal thread and is preferably about 30 degrees. Such an angle of the thread of the adjusting nut 8 facilitates tight arrangement of helical coils Z of resilient bellows 9 in an adjustment space 8d formed between said adjusting nut 8 and the body 1, in particular between a projection 8b of the nut inner thread 8a turn and a front surface of the flange 1c of the body 1, and does not require large forces while turning the adjusting nut 8. According to the invention it is important to select suitable plastics materials or curable resin, of which both cooperating elements, namely the resilient bellows 9 and the threaded adjusting nut 8 are made, which elements cooperate together to ensure self-locking mechanism, wherein for the majority of pairs of plastic materials, of which said cooperating elements are made, and especially for the bellows 9 made of a rubber or thermoplastic elastomers and the adjusting nut 8 made preferably of plastic, more preferably of thermoplastic material, such as, for example, PA, PP, ABS, POM, the nut thread is self-locking.

In case of resilient bellows 9 made of materials having low coefficient of friction, such as for example Teflon, on a surface of the threaded adjusting nut 8 on its inner thread 8a surface as well as on the resilient bellows 9 additional locking elements, preferably in the form of projections or teeth which can prevent unintentional unscrewing of the adjusting nut 8 should be used. Such locking elements (not shown in figures) maintain the adjusting nut 8 during its rotational motion, while arresting it in a predetermined position by means of a shape-coupling joint.

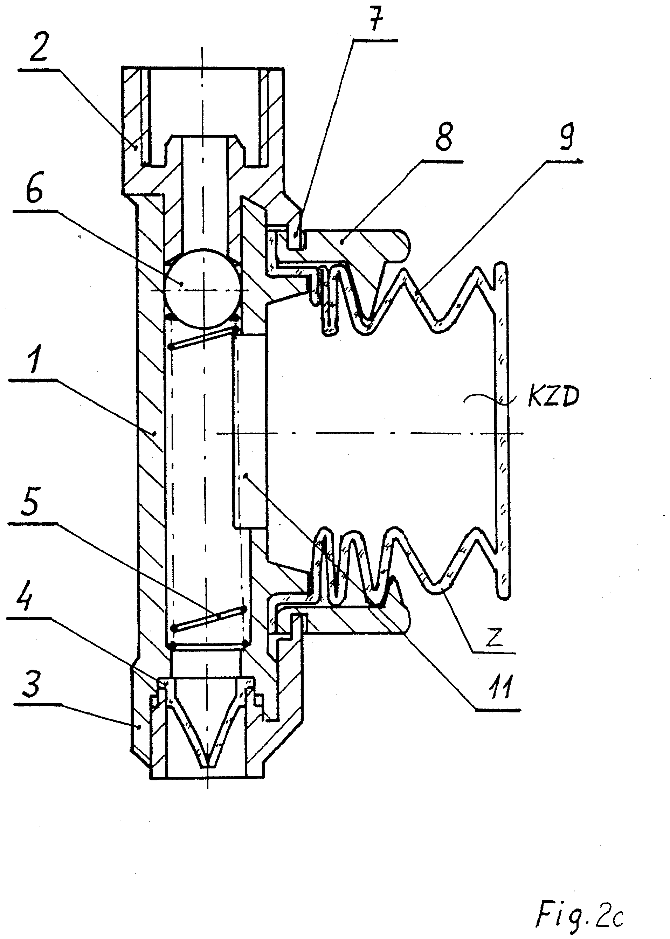

By turning around the adjusting nut 8, a working length of the resilient bellow 9 is changed, that is a length of the bellows on which it can flex under influence of a pressure can be exerted by a user by pressing with a hand or finger on the bottom 9b to dispense a liquid. Namely, in the first and second embodiments of the invention, during turning around the adjusting nut 8 a part of one helical coil or several helical coils of the resilient bellow 9 is "screwed in" and clamped and locked in a compressed state in the adjustment space 8d between the internal thread 8a of the adjusting nut 8 and the front surface of the flange 1c of the body 1, or "screwed out", i.e. released from that adjustment space 8d, whereby said working length of the resilient bellow 9 is changing. A change of said working length of the bellows implies a change of a volume of the bellow inner space 9a, and thus the volume of a useful part of the bellows, in which a liquid to be dispensed is collected. By turning the threaded adjusting nut 8 around in the direction which depends on a kind of its thread used i.e. right- or left-hand thread, rotating it in one direction reduces said volume and rotating it in the other (opposite) direction increases said volume of the inner space 9a of the bellows, and thus a dispensed volume, wherein a respective compressing and clamping of a certain portion of the resilient bellows 9 coils in the space formed between an inner side of the projecting inwardly thread 8a of the adjusting nut 8 and facing to it surface of a side wall of the body 1, in particular the front side of the flange 1c surrounding the connection opening 11 of the body 1, is carried out, as shown in fig. 2c, thereby decreasing a number of free coils of the resilient bellows 9, which may flex during pressing the bottom 9b of the bellows 9, and thus the volume of the inner space 9a.

Pressing on the bottom 9b of the bellows in a direction to the body 1 causes squeezing and compressing the bellows 9 and thus causes its axial deflection, and this results in squeezing out of a liquid contained in the bellows 9 inner space 9a through the opening 11 of the body 1 and further pushing out a liquid to the outside through the outlet opening 3a of the outlet fitting 3.

To prevent retraction of a liquid to the packaging P, during pressing the bellows to dispense a liquid, a valve element 6, preferably a valve, for example in the form of a ball 6 biased by a spring 5 is arranged between the inlet opening 2a of the inlet fitting 2 and the inner space 9a of the resilient bellows 9, constituting a working chamber of the dispensing device of the invention.

To prevent sucking an air from the outside, and at the same time to prevent dripping of a liquid from the outlet 3 of the device it is preferably to use a valve 4 in the opening 3a of the outlet fitting 3, which may be, for example, preferably, an elastomeric valve of "Duckbill" type or a domed valve with a slit, which is known in the art and now often used e.g. in packaging of ketchup, honey or syrups. A valve 4 is biased by the outlet fitting 3 to the body 1 in a sealed manner.

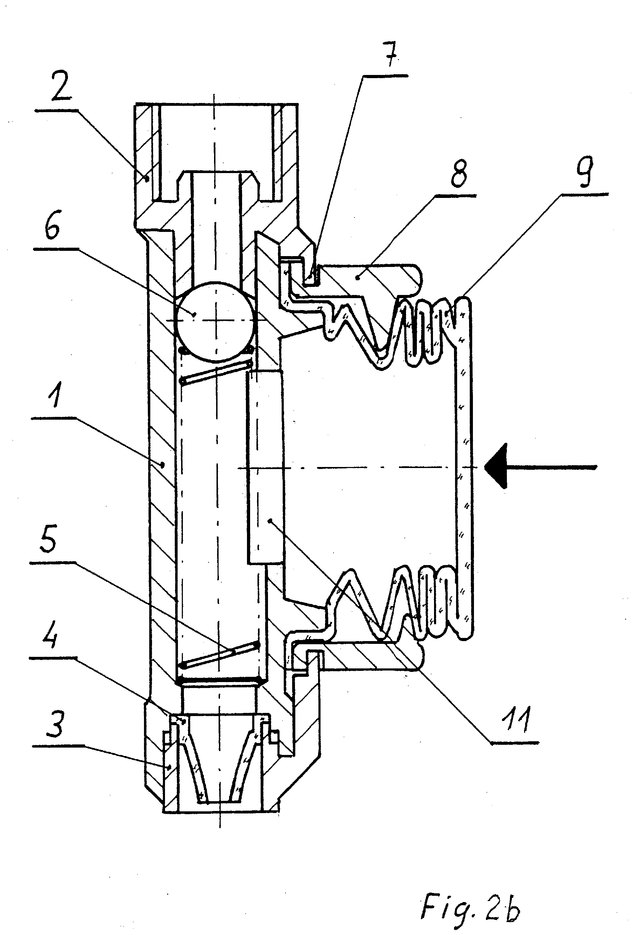

Fig. 2b shows operation of the dispensing device in the first embodiment, i.e. the dispenser according to the invention at the time of pressing on the resilient bellows 9. A liquid outflows in this embodiment from the inner space 9a of the bellows 9 through the opening 11 and the elastomeric valve 4.

Fig. 2c shows the dispensing device according to the invention in the first embodiment, which presents a method of stepless adjustment by a user a volume of liquid dispensed by the dispensing device, in this case a volume of a dosage was reduced, in which purpose a useful (working) volume of the resilient bellows 9, i.e. its inner space 9a is reduced by turning around the adjusting nut 8. In this embodiment, a part of the resilient bellows 9, i.e. a part of its coils Z, is compressed and arranged in arrested manner in a space between the inner thread 8a of the adjusting nut 8 and the body 1, in particular the surface of the flange 1c.

The dispensing device according to the invention, in the first embodiment operates in such a way that by turning around or rotating the threaded adjusting nut 8 a user regulates and adjusts a length of the free portion of the bellows 8, i.e. a number of the free helical coils Z of the resilient bellows 9 that are not compressed and arrested by the nut 8 and thus adjusting a volume of its available inner space 9a.

On the adjusting nut 8 can be arranged suitable scale indicating particular dose volumes, for example, by means of digits or numerals (e.g. 2, 4, 6, 8, 0), which can indicate a volume change in units, for example in millilitres. These digits or numbers may be indicated by a marker, preferably applied to the catch element 7. One full rotation of the nut can indicate a volume change by e.g. 10 ml, in addition tags can be applied to individual coils or folds of the bellows, for example: 10 ml, 20 ml, 30 ml, which can indicate a volume of a liquid to be dispensed. In a release condition, the entire bellows 9 is free that means all its coils or folds are outside of adjustment space 8d and by pressing on it a full dose can be dispensed, for example, 30 ml of a liquid. After turning the adjusting nut 8 a part of the bellows 9 portion, i.e. a part of its folds or helical coils, is squeezed and pressed under the adjusting nut 8 and thus closed in the adjustment space 8d, thereby these coil or folds are not involved in dosing. Thus, the two full turns causes a change of a dispensed volume of about 20 ml. So that, pressing the bellows 9 in such a position makes dosing only 10 ml of a liquid.

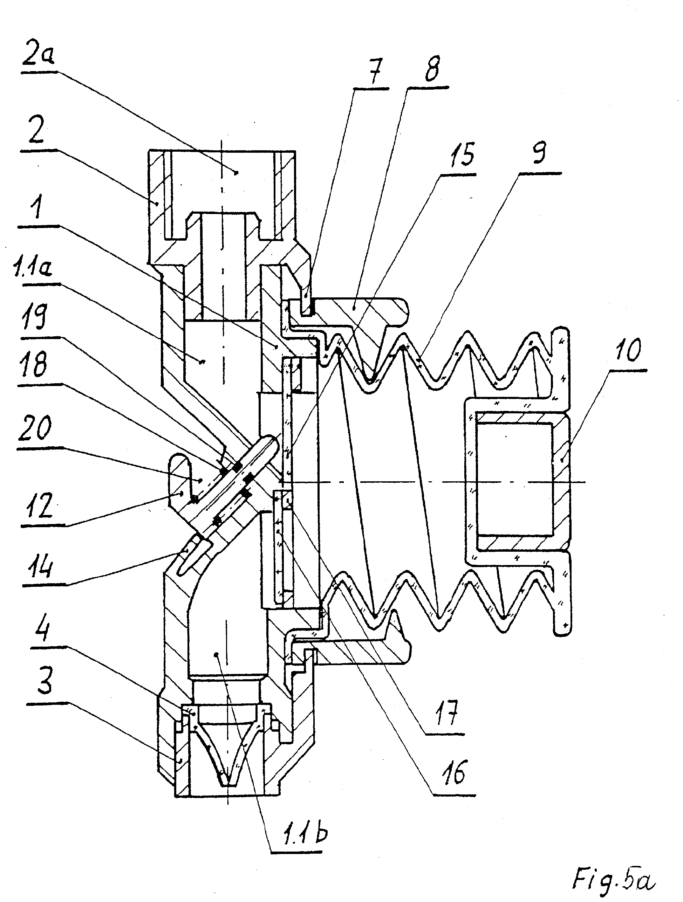

Another embodiment of the dispensing device according to the invention, i.e. the second embodiment, is shown in figs. 5a-5d, wherein the same or similar structurally and functionally constructional elements as for the embodiment shown in figs. 2a-2c are designated with the same reference numerals and have the same names.

Fig. 5a shows a dispensing device D comprising, as in the previous embodiment, the device body 1 consisting of a longitudinal portion which at its opposite ends is connected to two fittings, an inlet 2 and an outlet 3, forming inlet and outlet nozzles, arranged opposite to each other. In the device body 1 on one end, an inlet fitting 2 with an inlet opening 2a are mounted, and, preferably, on the opposite end, an outlet fitting 3 with an outlet opening 3a are mounted, in which opening 3a a valve element 4, preferably in the form of elastomeric valve 4, is mounted. Both inlet fitting 2 and outlet fitting 3, forming inlet and outlet nozzles, respectively, are provided with catch elements 7, preferably hook-shaped, having similar construction and arrangement as in the first embodiment shown in figs. 2a-2c, for locking slidable movement, i.e. a linear displacement of an adjusting nut 8 relative to a resilient bellows 9 and the device body 1. The body 1 has an internal, preferably approximately axial, longitudinal central opening, defining an inner space 1a of the body 1 and a connection opening 11 arranged on a side wall surface of the body 1, transverse to its axis, and preferably perpendicular to said axis which opening being in fluid communication with the inner space 1a and which is surrounded by outwardly projecting flange 1c. At the same side wall of the body and to the body 1 and especially to the flange 1c surrounding the connection opening 11, as in the previous embodiment, a resilient bellows 9, having a contour generally similar to cylindrical shape, is attached by its open end side. Such resilient bellows 9 is formed as composed of a certain number of folds F in the form of helical coils Z, forming the folds along its full length, as in the first embodiment shown figs. 2a-c, while the second opposite end of said resilient bellows 9, distant to the body 1, is closed by a bottom 9b. In this embodiment, in the bottom 9b is additionally mounted a plug 10 which may be, however, alternatively omitted. The plug 10 stiffens the bottom of the bellows that results in more accurate dosing, and in addition it can perform decorative or advertising functions (e.g. by bearing a logo) . The plug 10 may also be used in the case of the bottom 9b of the bellows 9 in the first embodiment shown in figs. 2a-c.

As in the first embodiment shown in figs. 2a-c, the dispensing device D according to the invention is provided with an assembly for stepless and continuous adjustment of a volume of a dispensed liquid, in this case by adjusting a volume of the inner space 9a of the resilient bellows 9, and thus the dosing volume KZD. The assembly for stepless adjustment cooperates with helical coils Z of the resilient bellows 9, constituting its folds, and preferably comprises a control element 8 which surrounds from outside a side circumferential surface of the bellows 9 at least on a certain portion of its length. The assembly for stepless continuous adjustment of a volume as in the previous embodiment comprises an enclosing element in the form of an adjusting nut 8 disposed around the outer circumferential surface of the resilient bellows 9, which nut is provided with an internal thread 8a, adapted in size and shape to the size of the helical coils Z of the resilient bellows 9, wherein said internal thread 8a of the adjusting nut 8 comprises preferably one, particularly one incomplete thread turn that means a turn not extending about full 360° thread but less than 360°, wherein said internal thread is formed in the same manner as in the case of the adjusting nut for the first embodiment according to figs. 2a-c.

The adjusting nut 8 is rotatably mounted relative to said resilient bellows 9 but, in this second embodiment, also non-displaceably relative to the resilient bellows 9 and at the same time relative to the body 1, as in the case of the first embodiment shown in figs. 2a-c.

The difference in construction between the first and second embodiment of the dispensing device D, respectively, shown for example in figs. 2a-2c and 5a-5d lies in that additionally two valve elements, namely an inlet valve 15 and outlet valve 16, are positioned in the connection opening 11 of the device body 1 and further in providing a recess 20 on a side surface of the body 1, opposite to the connection opening 11 which recess 20 having side walls inclined at an angle and converging towards the inside, for example forming in cross-section a V-shape, wherein said inclined walls of the recess 20 divide said central through opening 1a forming an inner space 1a of the body 1, which is shown in the first embodiment of figs. 2a - 2c, into two separate sections of said central opening, forming a partial opening 1.1a and partial opening 1.1b as shown in figs. 5a-5c. Said partial opening 1.1a is connected to the inlet fitting 2 and is in fluid communication with its inlet opening 2a on one hand, and through the valve element 15 located in this part of the connecting opening 11 with said inner space 9a of the resilient bellows 9, while the partial opening 1.1b is in fluid communication with a valve element 4 having outlet opening 3a of said outlet fitting 3 on one hand, and on the other hand through the outlet valve 16 with said inner space 9a of the resilient bellows 9.

The recess 20 may be located substantially centrally along the length of the body 1 and in each case opposite the connection opening 11, on the opposite wall of the cylindrical body 1 relative to the connection opening 11, and at the height of said connection opening 11 in such a way that an internal apex of the recess 20 reaches the connection opening 11 and divides it into two portions, an inlet portion of said opening 11 and an outlet portion of said opening 11 in a form of said inlet and outlet partial openings. In the inlet portion of the connection opening 11 an inlet valve 15 is provided while in its outlet portion an outlet valve 16 is provided. In the recess 20 on one of its inclined walls, in a suitable hole in said wall, a button member 12 in the form of a press button is provided, which is secured against falling out by a latch 14, placed, preferably, on another wall of said recess, particularly preferably, an opposite wall with respect to the recess 20. A button member 12 is sealed in respective opening of the recess wall by a gasket 19 and may be biased by a spring 18 of said button member 12 and it is used to open the inlet valve 15 when performing adjustment of the dispensing device to decreasing dispensed liquid volume, i.e. during turning the adjusting nut 8 in suitable direction, reducing a number of available free helical coils Z of the resilient bellows 9, which may flex during dispensing, to prevent uncontrolled outflow of a liquid through the valve 3.

The recess 20 makes possible to move the button member 12 therein and preferably for ergonomic and technological reasons has a V-shape or similar to a V-shape.

The inlet valve 15 and outlet valve 16 can be formed as one common elastomeric or rubber membrane with two slits or in the form of two adjacent separate membranes, each of which is shaped in a semicircle-shape with a corresponding slit shown in fig. 4. The membrane or membranes is/are attached to the device body 1 in a region of the connecting opening 11 by pressing insert 17.

Operation of the dispensing device, as well as adjusting and setting of a dispensed volume of a liquid are the same as in previously described first embodiment shown in figs. 2a - 2c and as shown in figs. 5a-5d, in which sequential functional positions of component elements of the dispensing device according to the second embodiment illustrates successive steps and stages during operation of the device. The individual drawings show respectively:

Fig. 5a - presents a position in a release stage of the dispensing device. By using a different shape of the resilient bellows 9 with the membrane which has been stiffened by the plug 10 smaller dead volume of said bellows was achieved and the device demonstrates particularly good operation in relation to dispensing liquids with increased viscosity, for example such as: washing liquids, soaps, certain concentrated detergents, concentrates and syrups of food industry. The plug 10 also prevents deformation of the bellows under pressing, and thus increases accuracy and repeatability of dosing.

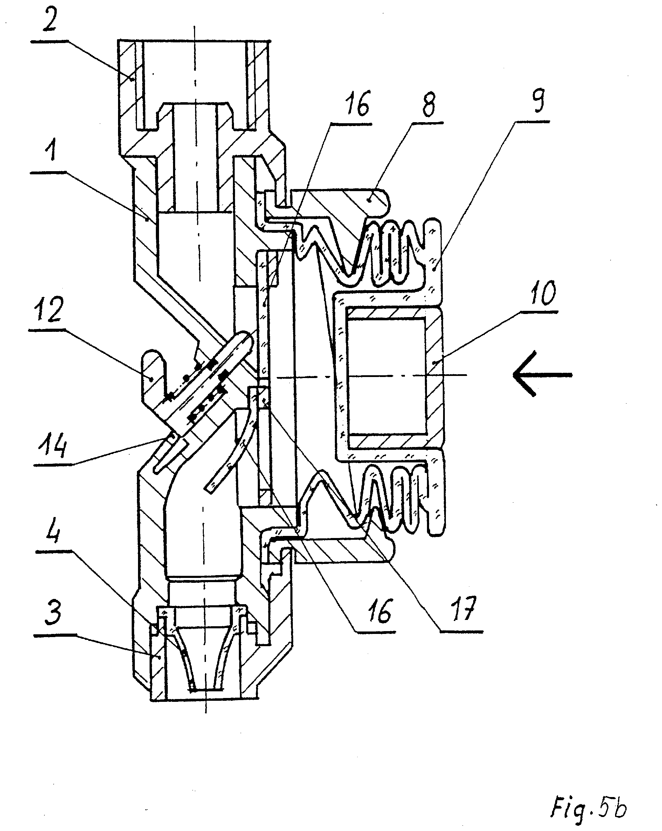

Fig. 5b - shows an operation stage after pressing the resilient bellows 9 by the plug 10 in axial direction towards the body 1 which causes increasing pressure in the dosing chamber formed by the inner space 9a of the bellows 9, causing opening the outlet valve 16 and outflow of a liquid through the valve element 4.

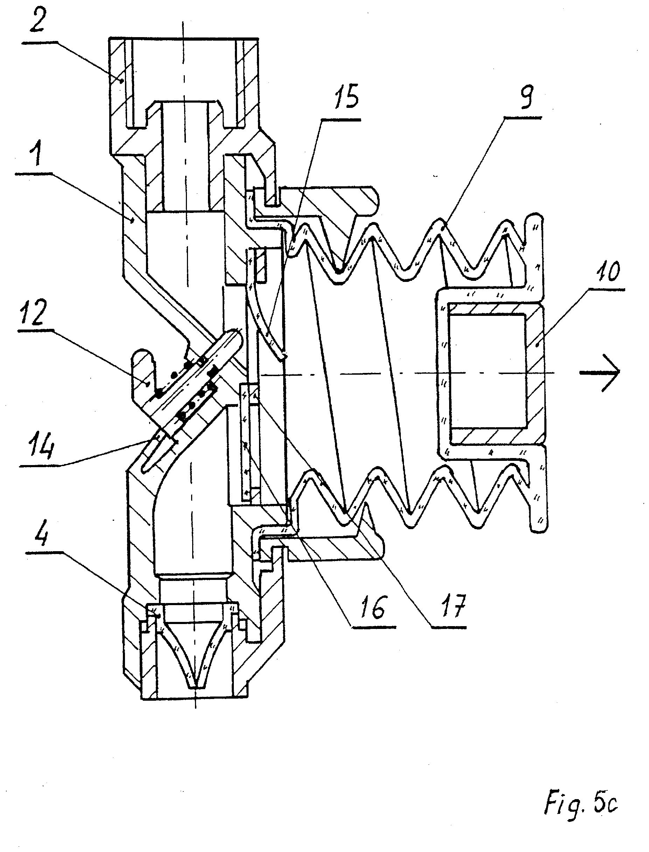

Figure 5c - shows operation stage of the device D after releasing the pressure on the resilient bellows 9, for example imposed by an optional plug 10, in which stage the bellows 9 returns to its initial state under action of its own resilience as well as under pressure of a liquid inflowing to the inner space 9a or a chamber of the bellows 9 through the inlet valve 15.

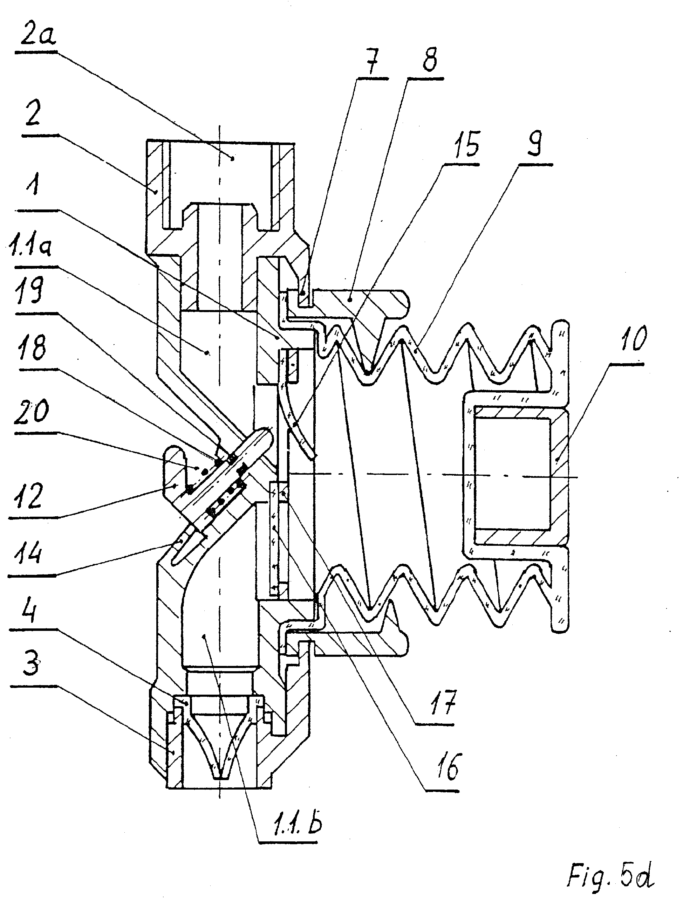

Fig. 5d - shows a way of regulation and adjustment of a dosing volume of the device. By turning around the adjusting nut 8 along the helical contour of the bellows folds, that means along helical coils Z of the resilient bellows 9, the number of the free folds, i.e. helical coils, that can be subjected to deflection under axial pressure is reduced, and thus the inner space 9a forming the working volume of the bellows, and therefore the dosed liquid volume KZD, is reduced.

Fig. 4 shows a detailed view which schematically shows a view of the inlet valve 15 and outlet valve 16, which in this embodiment are formed as a slit in one resilient element (made of elastomer or rubber) forming a common membrane, wherein each said slit have the U-shaped contour or approximate to the "U"-letter shape, while said resilient element is held by the insert 17 pressing the valves 15, 16 to the body 1 in a region of the connection opening 11.

The button 12 serves to open the inlet valve 15 during adjustment of the device when decreasing the dosing volume, (i.e. during turning the adjusting nut 8 in the suitable direction) to prevent uncontrolled outflow of liquid through the outlet fitting 3. Excess of a liquid is returned back into the input connector called the inlet fitting 2 in this description. Said button spring 18 causes automatic return of the button 12 to the release position after releasing pressure on the button 12 and after completion of adjustment of the dosing volume of liquid by turning the adjusting nut 8.

The dispensing device D according to the invention can be adapted to different types of flexible packaging provided with spouts having various contours of thread by applying various internal threads of the inlet fitting 2 thanks to possibility to be connectable to cylindrical device body 1, for example by pressing-in or other type of connection means, different fittings adapted to specific threads used in flexible packaging, for example Doypack type. The advantage of this solution is that the complex shape of the body 1, preferably cylindrical, can be performed in one mould, and relatively simple and cheap to manufacture inlet/outlet fittings can be produced in various moulds, resulting in improved economics of manufacture of the dispenser.

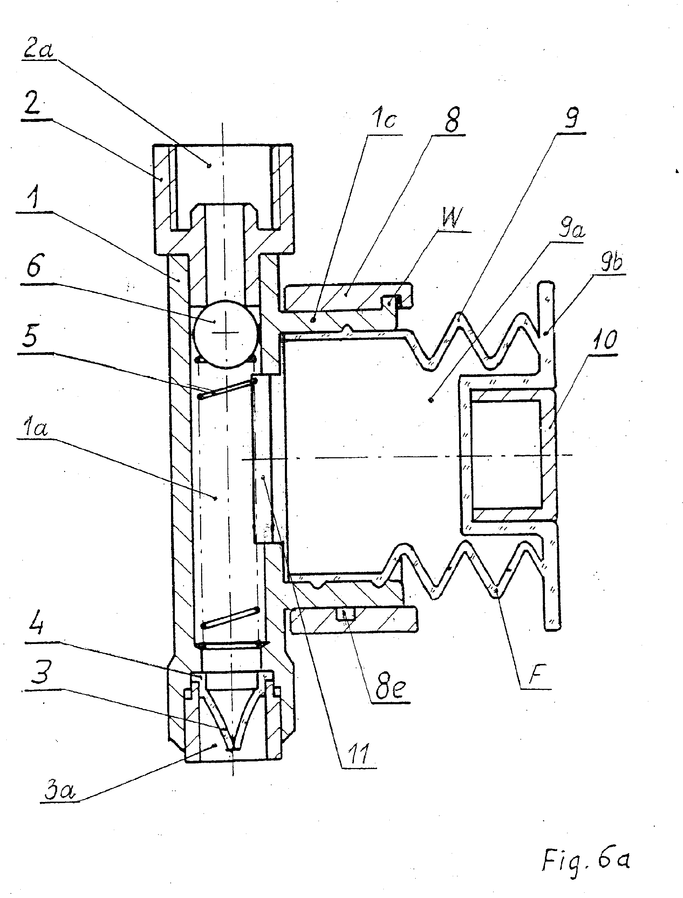

Another variant of the dispensing device that is not according to the invention in the form of the third embodiment is shown in figs. 6a-6c. As in the first embodiment shown in figs. 2a-c, as well as in the second embodiment shown in figs. 5a-5d, the constructional components which are structurally and functionally similar are designated by the same reference numerals. The dispensing device D in this embodiment is provided with the device body 1, as in the previous embodiments, comprising a longitudinal part having at its opposite ends connected fittings, the inlet fitting 2 and outlet fitting 3, forming the inlet and outlet nozzles, preferably opposite to each other. In this embodiment the inlet and the outlet fittings 2 and 3 are preferably not provided with catch elements 7 projecting in a direction of an axis of a connection opening 11 from their respective basis surfaces, although they may alternatively be present. In this case, they have to be so designed in terms of dimension to prevent excessive unscrewing an adjusting nut 8, for example, they can be elongated. The body 1 has an internal, preferably approximately, axial longitudinal central opening 1a, defining an inner space 1a of the body 1 and a connection opening 11 arranged on a side wall surface of the body 1, transverse to said central opening and preferably perpendicular to it. Said connection opening being in fluid communication with the inner space 1a and it is surrounded by an outwardly projecting flange 1c. From that side, to the flange 1c surrounding said connection opening 11, as in the previous embodiments, a resilient bellows 9, having a contour generally similar to cylindrical, is attached with its open end, which bellows 9 is formed as composed along its length of a certain number of adjacent folds F of the bellows 9, preferably in the form of circular folds F, wherein alternatively, said folds can have a form of helical coils, while an opposite second end of the resilient bellows 9, which is also opposite to the body 1, is closed by a bottom 9b, wherein in this embodiment, in the bottom 9b a plug 10 is additionally mounted.

As in the embodiments shown in figs. 2a-c and figs. 5a-d, the dispensing device according to the invention is provided with an assembly for stepless, continuous adjustment of a volume of dispensed liquid, in this case by setting up a working volume of the inner space 9a of the resilient bellows 9, and thus the dosing volume KZD. According to this embodiment, that is not according to the invention said assembly for stepless and continuous adjustment of a dosing volume, however, is realized not by changing internal working volume of the bellows 9 that is a number of its free coils or folds, but by limiting possible, available degree of deflection of the bellows 9 under axial pressure, that limitation is realized by means said adjusting nut 8, namely, by limiting a number of folds F or coils that can deflect, while exerting pressure on the bottom 9b during dispensing, which number is limited by a change of the adjusting nut 8 position.

The assembly for continuous, stepless adjustment of a volume as in the previous embodiments comprises a control element 8 in the form of an adjusting nut 8 having a groove 8e on and around its inner surface, forming, preferably, one turn of an internal thread 8e, cooperating with corresponding projection W provided on outer surface of a flange 1c of the body 1. The internal thread 8e is dimensionally adapted to dimensions of the projection W on the flange 1c of the body 1, wherein said internal thread 8e of the adjusting nut 8 comprises preferably one, particularly preferably one incomplete, thread turn, namely extending about less than full 360° turn while a pitch of the internal thread is smaller than total length of the adjusting nut 8. Said internal thread itself, acting as a guide groove 8e, preferably begins at the front of an outer front surface of the adjusting nut 8 and terminates at certain distance, preferably 1 - 2 mm, from the other front surface of said adjusting nut 8 in order to prevent unscrewing said adjusting nut 8 from the body flange 1c.

The projection W on the flange 1c has to be able to slight deflection to facilitate assembly. This can be obtained by providing side slits in its side wall.

In this embodiment, the adjusting nut 8 is pivotally and slidingly mounted relative to the resilient bellows 9, and at the same time relative to the body 1. This is different construction from the first and the second embodiments shown in figs. 2a-c and 5a-d.

Said internal thread 8e may be rectangular, trapezoidal or metric. Depending on surface parameters and material of the adjusting nut 8 and the body 1, it is preferably to select such a thread which is self-locking, that is, if the inner diameter of the nut is ***d*** and a pitch of internal thread 8c is ***s*** coefficient of static friction µ should be selected as greater than tangent s/πd (**Tg *s*/*πd*)**.

The internal thread 8e of the nut 8 cooperates with a projection W on the flange 1c that matches its shape and dimension to the contour of the thread with a slight clearance.

Total length of the adjusting nut 8 is at least equal to total length of the flange 1c, but may be bigger, i.e. the adjusting nut 8 can be longer than the flange 1c.

This solution allows to presetting of a volume of dispensed liquid without using a button 12 as presented in the second embodiment shown in figs. 5a-5d. The internal volume of the internal space 9a of the resilient bellows 9 does not change during adjustment of a volume of a liquid dose. The bellows can be either in its traditional form, i.e. consisting of circular folds F or of helically shaped coils, that is it can be also composed of helical coils Z, as in the previously described embodiments. The bellows is attached, unlike as in the first and second embodiments, to inner surface of the flange 1c by means of shape-joint-coupling on a shape-connection principle and/or by gluing or welding. Such configuration allows placing the control element in the form of the adjusting nut 8 about the outer surface of the flange 1c of the body 1 that is different from the first and second embodiments, while in these previously presented embodiments the nut 8 is placed around outer surface of the resilient bellows 9. In this embodiment, the bottom 9b of the bellows 9 has an enlarged diameter with respect to the bellow 9 diameter as compared to previously presented embodiments. Preferably, a diameter of the bottom 9b of the resilient bellows 9 in the third embodiment is at least equal to an outer diameter of the adjusting nut 8, alternatively it can be larger.

Fig. 6a - shows the release stage position of the dispensing device in the third embodiment not according to the invention in which a dispensed maximum volume position of selected liquid is set up.

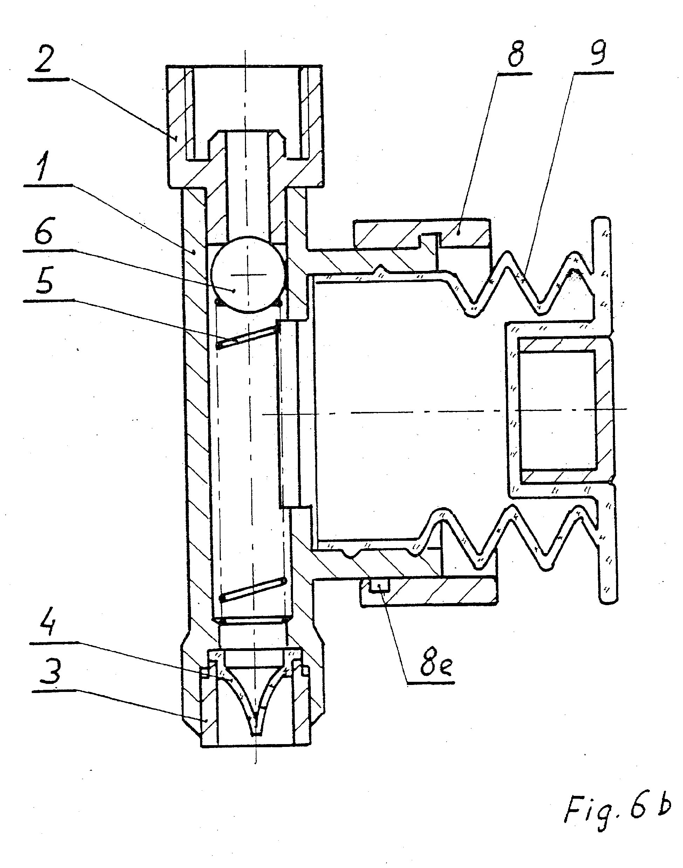

Fig. 6b - shows a way of adjusting of a selected dose volume of the dosing device. Turning around the adjusting nut 8 a user changes its position with respect to the resilient bellow 9 and to the body 1 because it moves forward or backward with a rotation in direction away from the body 1 or towards the body 1, depending on type of its internal thread 8e, thereby changing available free length of the bellows 9, (i.e. its length which is outside the nut 8) the number of free folds of the bellows 9 which can be subjected to flexing under pressing the bottom 9b or plug 10 in axial direction towards the body 1, thereby regulating the volume KZD of a liquid that can be dispensed.

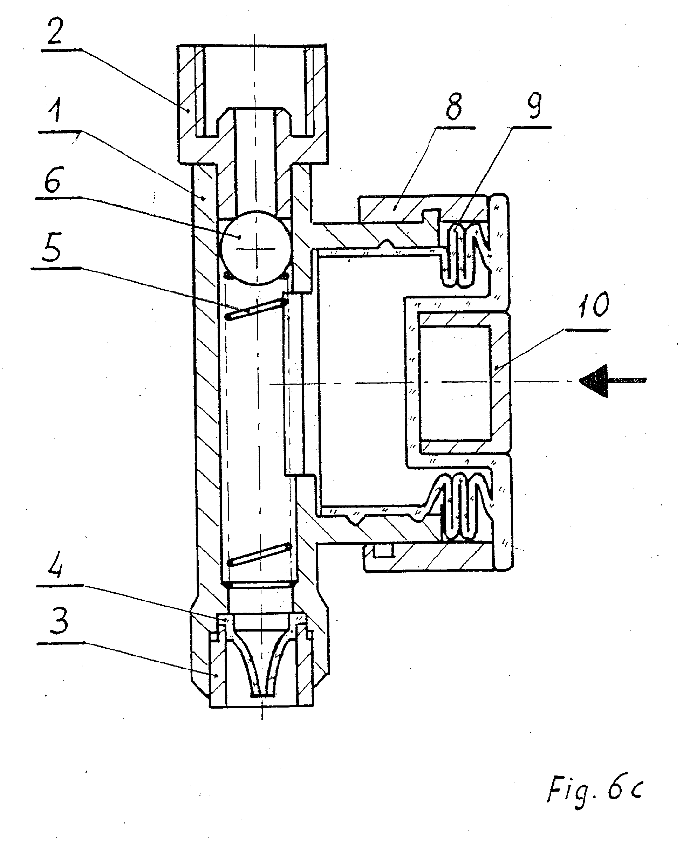

Fig. 6c - shows a state after pressing on the resilient bellows 9 by the plug 10 in axial direction towards the body 1, which results in increasing pressure in the dosing chamber, i.e. in the inner space 9a of the bellows 9, and thus outflow of a liquid through the connection opening 11 to the valve element 4 and out from the outlet fitting 3.

The above-described embodiments of the dispenser according to the invention, especially their constructional features and adequate structural solutions may be used not only in the way described exemplary in the above description but also in various possible constructional combinations and structural solutions. For example, in the third embodiment not according to the invention an inlet valve 15 and an outlet valve 16 can be used. In addition, when the adjusting nut 8 cooperates with a surface of resilient bellows shaped in the form of helical coils and can perform more than one rotation, the auxiliary markings, for example numeric, e.g. 10, 20, indicating the set out volume can be applied on such individual folds of the bellows in the first and second variant and additionally such auxiliary markings can be placed at outer portion of the flange 1c of the body 1 in the third variant, in order to further facilitate operation of the dispensing device.

### List of references

1 - a body
1a - an internal space of the body
1c - a flange of the body
11 - connection opening of the body
2 - inlet fitting/ input connector
2a - inlet opening
3 - outlet fitting
3a - outlet opening
4 - discharge valve, for example, elastomeric
5 - a spring
6 - a ball
7 - catch elements
7a - receiving space
8 - adjusting nut (control element)
8a - internal thread of the nut
8b - protrusion of the internal thread
8d - adjusting space of the nut
8e - internal thread in the form of a guide groove
9 - resilient bellows
9a - inner space of the bellows
9b - bottom of the bellows
10 - a plug
12 - a button
14 - latch preventing the button 12 to fall out
15 - inlet valve
16 - outlet valve
17 - insert for biasing valves (pressing insert)
18 - spring of the button
19 - a gasket
20 - a recess
P - packaging (sachet, doypack, cheerpack)
D - dispensing device (dispenser)
HD - packaging holder, for example Doypack type
HK - catch (hook) for the packaging, for example doypack type - required opening in the container opposite the spout
KDZ - dosing chamber (equivalent to 9a)
Z - helical coils of the resilient bellows 9
F - folds of the resilient bellows 9
α - offset angle of the internal thread 8d
W - projection of the body flange

## Claims

1. A dispensing device (D) for dispensing liquids from flexible packaging, in particular for dispensing a defined amount of a liquid from a flexible packaging in the form of pouches or bags of plastic material, which device comprising a device body (1) having generally elongated shape, wherein in said body (1) at its one end, an inlet fitting (2) with an inlet opening (2a) is mounted and at its another end an outlet fitting (3) with an outlet opening (3a) is mounted, preferably said inlet fitting (2) and outlet fittings are arranged opposite each other, wherein the body (1) defines an inner space (1a) of the body, preferably in the form of an internal central opening (1a) and said body is further provided on its side surface with a connection opening (11) being in fluid communication with said central opening (1a), wherein to said connection opening (11), and preferably to a flange (1c) outwardly projecting from a side surface of the body (1) and surrounding said connecting opening (11) a resilient bellows (9) is attached in a sealed manner with its open end side, which resilient bellows has generally cylindrical shape and consists of a certain number of folds (F), preferably in the form of helical coils (Z), that folds are positioned along longitudinal extension of said bellows and wherein said resilient bellows (9) defines inside an inner space (9a) of said bellows (9) which inner space is in fluid communication with said connection opening (11) of the body (1), while opposite end of said resilient bellows (9) being closed with the bottom (9b) and wherein said folds or helical coils of resilient bellows (9) are adapted to flex under pressure exerted on said bottom (9b) thereof in axial direction of said bellows, towards the body (1),
**characterized in that**:
said dispensing device (D) is further provided with an assembly for stepless adjustment of a volume of dispensed liquid, wherein said assembly for stepless adjustment comprises a control element (8) cooperating with said resilient bellows (9) and arranged on outer side surface of said bellows (9) and/or said flange (1c) around their outer periphery, at least on a certain section of a length of said resilient bellows (9) and/or said flange (1c), and further said control element (8) is shaped in the form of an adjusting nut (8) and is provided with marks indicating an adjustable volume of a liquid to be dispensed, and wherein said stepless adjustment of a volume of dispensed liquid is performed by means of:
stepless setting up a volume of said inner space (9a) of said resilient bellows (9),
wherein said stepless setting can be performed for each, individual action of dispensing of a liquid.

2. The dispensing device (D) according to claim 1, **characterized in that**, said control element (8) of said assembly for stepless adjustment of a volume in the form of an adjusting nut (8) is disposed around outer peripheral surface of said resilient bellows (9), and particularly around outer surface of said helical coils (Z) or folds (F) of the bellows.

3. The dispensing device (D) according to any one of claims 1 or 2, **characterized in that**, said adjusting nut (8) is provided with an internal thread (8a) adapted in size to dimensions of helical coils (Z) of the bellows (9) for stepless continuous adjustment of a volume of said inner space (9a) of the resilient bellows (9) by setting out an appropriate, available number of free coils (Z) of said bellows (9), wherein said adjusting nut (8) is mounted without any possibility of longitudinal displacement relative to outer surface of said resilient bellows (9) and relative to said body (1), but with possibility for rotation relative to side surface of said resilient bellows (9) about longitudinal axis of said bellows (9), which axis coincides with the axis of said adjusting nut (8), and further wherein said internal thread (8a) defines a thread projection (8b).

4. The dispensing device (D) according to any one of claims 1-3, **characterized in that**, said internal thread (8a, ) of said control element in the form of said adjusting nut (8) comprises only one thread turn, preferably one incomplete thread turn extending about less than full 360°.

5. The dispensing device (D) according to any one of the preceding claims 1-4, **characterized in that**, said inlet fitting (2) and outlet fitting (3) are provided with catch elements (7) extending in the direction of the axis of said connection opening (11) from their respective bottom surfaces facing that side of the body (1) on which said connection opening (11) is arranged, surrounded with said flange (1c) fixedly attached to the body (1).

6. The dispensing device (D) according to claim 5, **characterized in that**, said catch elements (7) are so shaped as to be located at a distance from both, a side surface of the body (1) facing towards them and a surface of said flange (1c), so that a receiving space (7a) is defined.

7. The dispensing device according to claim 6, **characterized in that**, said catch elements (7) are formed for arresting axial sliding displacement of said control element in the form of said adjusting nut (8) relative to the body (1) .

8. The dispensing device (D) according to any one of claims 1-6, **characterized in that**, an adjustment space (8d) is formed between a front surface of said outer flange (1c) of the body (1) and said thread projection (8b) of said internal thread (8a) of said adjusting nut (8) for accommodating a portion of said helical coils (Z) number forming said folds (F) of said resilient bellows (9) during rotation of said adjusting nut (8).

9. The dispensing device (D) according to any one of claims 1-8, **characterized in that**, valve elements, preferably in the form of inlet valve (15) and outlet valve (16) are provided in said connecting opening (11) of the body (1).

10. The dispensing device (D) according to any one of claims 1-9, **characterized in that**, a recess (20) is formed in a side surface wall of the body (1), opposite to said connection opening (11), said recess (20) is formed having walls inclined at an angle and converging towards inside, for example forming a V-shape in cross-section, wherein said walls of said recess (20) divide said inner space (1a) of the body (1) into two separate sections constituting a partial opening (1.1a) and a partial opening (1.1b), respectively.

11. The dispensing device (D) according to claim 10, **characterized in that**, said partial opening (1.1a) is connected to the inlet fitting (2) and it is in fluid communication with its inlet opening (2a) on the one hand, on the other hand it is connected through said valve element (15) located in a part of said connecting opening (11) to said inner space (9a) of said resilient bellows (9), while said partial opening (1.1b) is in fluid communication with the valve element (4) and discharging opening (3a) of said discharging fitting (3) on the one hand, and on the other hand through said outlet valve (16) with said inner space (9a) of said resilient bellows (9).

12. The dispensing device (D) according to any one of claims 1-11, **characterized in that**, on outer surface of said control element, preferably in the form of said adjusting nut (8), a suitable scale indicating a volume to be set and dosed in specified units, preferably in millilitres (ml), preferably in the form of digits or numbers, for example 2, 4, 6, 8, 0, which indicate a change in volume, is arranged, wherein in addition an auxiliary marks are preferably applied to individual folds (F) of said resilient bellows, and particularly on said helical coils (Z).

13. The dispensing device (D) according to any one of claims 1-12, **characterized in that**, additional indications are applied on outer surface of said resilient bellows (9) or said flange (1c) of the body (1) .

14. The dispensing device (D) according to any one of claims 1-13, **characterized in that**, the resilient bellows (9) is a bellows formed as a body of revolution, preferably with a cylindrical contour and a constant diameter and having lateral outer surface in the form of folds formed, preferably, in the shape of helical coils (Z) and/or alternatively circular folds (F).

15. The dispensing device (D) according to any one of claims 1-14, **characterized in that**, said control element, in the form of said adjusting nut (8) provided with an internal thread (8a) demonstrates self-locking with respect to rotational movement relative to said resilient bellows (9) and/or said flange (1c), and particularly relative to said bellows folds (F) and/or coils (Z) which self-locking is obtained by means of selection of appropriate materials for both said cooperating elements, or by means of shape and dimensional coupling of those elements.

## Patentansprüche

1. Dosiervorrichtung (D) für Dosierung von Flüssigkeiten aus flexiblen Verpackungen, insbesondere für Dosierung einer definierten Menge einer Flüssigkeit aus flexiblen Verpackungen in Form von Kunststoffbeuteln oder -säcken, wobei die Vorrichtung einen im Allgemeinen länglich ausgebildeten Vorrichtungskörper (1) umfasst, wobei in diesem Körper (1), an seinem einen Ende, ein Einlassanschluss (2) mit einer Einlassöffnung (2a) und an seinem zweiten Ende ein Auslassanschluss (3) mit einer Auslassöffnung (3a) oder Ausgießöffnung angeordnet sind, vorzugsweise der Einlassanschluss (2) und der Auslassanschluss (3) einander gegenüberliegend angeordnet sind, wobei der Körper (1) den Innenraum (1a) des Körpers begrenzt, vorzugsweise in Form einer inneren zentralen Öffnung (1a), und mit einer auf seiner Seitenfläche angeordneten Anschlussöffnung (11), die mit der zentralen Öffnung (1a) in Fluidverbindung steht, versehen ist, wobei an der Anschlussöffnung (11), und vorzugsweise an einem diese umgebenden, auf der Außenfläche des Körpers (1) vorstehenden Flansch (1c) ein von der Seite seines offenen Endes abgedichteter Federbalg (9) angebracht ist, wobei der Federbalg im Allgemeinen eine zylindrische Form aufweist und aus einer bestimmten Anzahl von Falten (F) besteht, vorzugsweise in Form von Schraubenwindungen (Z), die entlang der Längsausdehnung des Balgs angeordnet sind, wobei der Federbalg (9) drinnen einen Innenraum (9a) des Balgs (9) begrenzt, der mit der Anschlussöffnung (11) des Körpers (1) in Fluidverbindung steht, während das gegenüberliegende Seite bzw. Ende des Federbalgs (9) mit einem Boden (9b) des Balgs geschlossen ist, wobei die Falten oder die Schraubenwindungen des Federbalgs (9) zum Biegen unter dem auf den Boden (9b) in axialer Richtung zu dem Körper (1) ausgeübten Druck eingerichtet sind,
**dadurch gekennzeichnet, dass**
die Dosiervorrichtung (D) ferner mit einer Anordnung zur stufenlosen Einstellung des dosierten Volumens der dosierten Flüssigkeit versehen ist, wobei die Anordnung zur stufenlosen Einstellung ein mit dem Federbalg (9) zusammenwirkendes Einstellelement (8), das an der Außenseitenfläche des Balgs (9) und/oder des Flansches (lc), um ihren Außenumfang herum, mindestens an einem bestimmten Längenabschnitt des Federbalgs (9) und/oder des Flansches (1c), angeordnet ist, umfasst, und wobei ferner dieses Einstellelement (8) in Form einer Einstellmutter (8) ausgebildet und mit Markierungen versehen ist, die das eingestellte Volumen der dosierten Flüssigkeit anzeigen, das durch:
- stufenlose Volumeneinstellung des Innenraumes (9a) des Federbalgs (9) eingestellt wird, wobei die stufenlose Volumeneinstellung für jeden einzelnen Flüssigkeitsdosiervorgang durchgeführt werden kann.

2. Dosiervorrichtung (D) nach Anspruch 1, **dadurch gekennzeichnet, dass** ein in Form einer Einstellmutter (8) ausgebildetes Einstellelement (8) der Anordnung zur stufenlosen Volumeneinstellung um die äußere Umfangsfläche des Federbalgs (9), und insbesondere um die Außenfläche der Schraubenwindungen (Z) oder Falten (F) des Federbalgs angeordnet ist.

3. Dosiervorrichtung (D) nach einem der Ansprüche 1 oder 2, **dadurch gekennzeichnet, dass** die Einstellmutter (8) mit einem Innengewinde (8a) versehen ist, dessen Abmessungen an die Abmessungen der Schraubenwindungen (Z) des Balgs (9) zur stufenlosen Einstellung des Volumens des Innenraums (9a) des Federbalgs (9) durch Einstellen einer geeigneten, verfügbaren Anzahl von freien Schraubenwindungen (Z) des Federbalgs (9) angepasst sind, wobei die Einstellmutter (8) derart aufgesetzt ist, dass keine Längsverschiebung gegenüber der Außenfläche des Federbalgs (9) und gegenüber dem Körper (1) möglich ist, wobei jedoch eine Drehung gegenüber der Oberfläche des Federbalgs (9) um die Längsachse des Balgs (9), die mit der Achse der Einstellmutter (8) zusammenfällt, möglich ist, und ferner wobei das Innengewinde (8a) einen Gewindevorsprung (8b) umfasst.

4. Dosiervorrichtung (D) nach einem der Ansprüche 1-3, **dadurch gekennzeichnet, dass** das Innengewinde (8a) des Einstellelements in Form einer Einstellmutter (8) nur eine einzelne Windung, vorzugsweise eine unvollständige Windung, die sich um etwa weniger als volle 360° erstreckt, umfasst.

5. Die Dosiervorrichtung (D) nach einem der vorhergehenden Ansprüche 1-4, **dadurch gekennzeichnet, dass** der Einlassanschluss (2) und der Auslassanschluss (3) mit Hakenelementen (7) versehen sind, die sich in Richtung der Achse der Anschlussöffnung (11) von ihren jeweiligen Grundflächen erstrecken, an der Seite des Körpers (1), auf der die Anschlussöffnung (11) mit dem an den Körper (1) fest angebrachten Flansch (1c) angeordnet ist.

6. Dosiervorrichtung (D) nach Anspruch 5, **dadurch gekennzeichnet, dass** die Hakenelemente (7) derart ausgebildet sind, dass sie in einem Abstand sowohl von der ihnen zugewandten Seitenfläche des Körpers (1), als auch von der Oberfläche des Flansches (1c) angeordnet sind, so dass auf diese Weise ein Aufnahmeraum (7a) abgegrenzt ist.

7. Dosiervorrichtung (D) nach Anspruch 6, **dadurch gekennzeichnet, dass** die Hakenelemente (7) zum Aufhalten der axialen Schiebebewegung des Einstellelements in Form einer Einstellmutter (8) gegenüber dem Körper (1) ausgebildet sind.

8. Dosiervorrichtung (D) nach einem der Ansprüche 1-6, **dadurch gekennzeichnet, dass** zwischen der Vorderfläche des Außenflansches (1c) des Körpers (1) und dem Vorsprung (8b) des Innengewindes (8a) des Einstellelements in Form einer Einstellmutter (8) ein Einstellraum (8d) zum Aufnehmen eines Teils der die Falten (F) bildenden Schraubenwindungen (Z) des Federbalgs (9) bei der Drehung der Einstellmutter (8) gebildet ist.

9. Dosiervorrichtung (D) nach einem der Ansprüche 1-8, **dadurch gekennzeichnet, dass** Ventilelemente, vorzugsweise in Form eines Einlassventils (15) und eines Auslassventils (16), in der Anschlussöffnung (11) des Körper (1) angeordnet sind.

10. Dosiervorrichtung (D) nach einem der Ansprüche 1-9, **dadurch gekennzeichnet, dass** in der Seitenfläche der Wand des Körpers (1), gegenüberliegend der Anschlussöffnung (11), eine Ausnehmung (20) mit unter einem Winkel geneigten und in Richtung nach innen zusammenlaufenden Wänden, die beispielsweise im Querschnitt eine V-Form bilden, ausgebildet ist, wobei die Wände der Ausnehmung (20) den Innenraum (1a) des Körpers (1) in zwei getrennte Abschnitte teilen, die, entsprechend, die Teilöffnung (1.1a) und die Teilöffnung (1.1b) bilden.

11. Dosiervorrichtung (D) nach Anspruch 10, **dadurch gekennzeichnet, dass** die Teilöffnung (1.1a) mit dem Einlassanschluss (2) verbunden ist sowie mit seiner Einlassöffnung (2a) einerseits und durch ein im Teil der Anschlussöffnung (11) angeordnetes Ventilelement (15) mit dem Innenraum (9a) des Federbalgs (9) andererseits in Flussverbindung steht, während die Teilöffnung (1.1b) durch ein Ventilelement (4) mit der Auslassöffnung (3a) des Auslassanschlusses (3) einerseits und durch ein Auslassventil (16) mit dem Innenraum (9a) des Federbalgs (9) andererseits in Flussverbindung steht.

12. Dosiervorrichtung (D) nach einem der Ansprüche 1-11, **dadurch gekennzeichnet, dass** auf der Außenfläche des Einstellelements, vorzugsweise in Form einer Einstellmutter (8), eine geeignete Skala zum Anzeigen des zu dosierenden Volumens in bestimmten Einheiten, vorzugsweise in Millilitern, vorzugsweise in Form von Zahlen oder Ziffern, beispielsweise 2, 4, 6, 8, 0, die eine Volumenänderung anzeigen, angeordnet ist, wobei vorzugsweise zusätzlich Hilfsmarkierungen auf den einzelnen Falten (F) des Balgs in Form von Schraubenwindungen (Z) aufgebracht sind.

13. Dosiervorrichtung (D) nach einem der Ansprüche 1-12, **dadurch gekennzeichnet, dass** zusätzliche Markierungen auf der Außenfläche des Federbalgs (9) oder des Flansches (1c) des Körpers (1) aufgebracht sind.

14. Dosiervorrichtung (D) nach einem der Ansprüche 1-13, **dadurch gekennzeichnet, dass** der Federbalg (9) ein als Rotationskörper ausgebildeter Balg ist, vorzugsweise mit einer zylindrischen Kontur und einem konstanten Durchmesser sowie einer Außenseitenfläche in Form von Falten, die vorzugsweise in Form von Schraubenwindungen (Z) und/oder alternativ kreisförmigen Falten (F) ausgebildet sind.

15. Dosiervorrichtung (D) nach einem der Ansprüche 1-14, **dadurch gekennzeichnet, dass** das Einstellelement, vorzugsweise in Form einer mit einem Innengewinde (8a) versehenen Einstellmutter (8) eine Selbsthemmung in der Drehbewegung relativ zum Federbalg (9) und/oder dem Flansch (lc), und insbesondere relativ zu den Schraubenwindungen (Z) sowie Falten (F) des Federbalgs aufweist, welche Selbsthemmung durch die Auswahl der Materialien für beide zusammenwirkenden Elemente oder aufgrund einer formschlüssigen und dimensionalen Verbindung bzw. Kopplung dieser Elemente erreicht wird.

## Revendications

1. Dispositif de dosage (D) pour doser des liquides à partir d'emballages flexibles, notamment pour doser une quantité définie de liquide à partir d'emballages flexibles sous forme de sacs ou de sachets en plastique, ce dispositif comportant un corps (1) de forme générale allongée, dans ce corps (1) sont encastrées, sur un bout, l'extrémité d'entrée (2) avec l'ouverture d'entrée (2a) et sur l'autre bout, l'extrémité de sortie (3) avec l'ouverture de sortie (3a) ou de coulée, de préférence l'extrémité d'entrée (2) et l'extrémité de sortie (3) sont situées l'une en face de l'autre, le corps (1) délimite l'espace intérieur (1a) du corps, de préférence sous forme d'une ouverture centrale intérieure (1a) et il est pourvu d'une ouverture de raccordement (11) située sur sa surface latérale, en communication fluide avec l'ouverture central (1a), à cette ouverture de raccordement (11), et de préférence à la bride environnante (le) faisant saillie sur la surface extérieure du corps (le), un soufflet élastique (9) est fixé d'une manière étanche du côté de l'extrémité ouverte du soufflet élastique (9), ayant une forme généralement cylindrique et comportant un certain nombre de plis (F), de préférence sous forme de spires hélicoïdales (Z), situées le long de la dimension longitudinale du soufflet, le dit soufflet élastique (9) limitant à l'intérieur l'espace intérieur (9a) du soufflet (9), qui est en communication fluide avec l'ouverture de raccordement (11) du corps (1), tandis que le côté opposé du soufflet élastique (9) est fermé par le fond (9b) du soufflet, les plis ou les spires du soufflet élastique (9) sont adaptés pour se plier sous la pression exercée sur le fond (9b) du soufflet dans le sens axial vers le corps (1),
**caractérisé en ce que**
le dispositif de dosage (D) est en outre pourvu d'un ensemble pour une régulation continue de volume distribué du liquide dosé, l'ensemble pour une régulation continue comprend un élément de régulation (8) coopérant avec le soufflet élastique (9) situé sur la surface latérale extérieure du soufflet (9) et/ou bride (le), autour de leur circonférence extérieure, au moins sur une certaine longueur du soufflet élastique (9) et/ou de la bride (le) et, en outre, cet élément de régulation (8) a la forme d'un écrou de réglage (8) et il est pourvu de repères indiquant le volume ajusté de liquide dosé par:
- réglage continue du volume de l'espace intérieur (9a) du soufflet élastique (9), le réglage continue pouvant être effectué pour chaque opération individuelle de dosage du liquide.

2. Dispositif de dosage (D) selon la revendication 1, **caractérisé en ce que** l'élément de régulation (8) de l'ensemble de régulation continue du volume configuré sous forme d'un écrou de réglage (8) est situé autour de la surface périphérique extérieure du soufflet élastique (9), notamment autour de la surface extérieure des spires hélicoïdales (Z) ou des plis (F) du soufflet.

3. Dispositif de dosage (D) selon l'une des revendications 1 ou 2, **caractérisé en ce que** l'écrou de réglage est muni d'un filetage intérieur (8a), dimensionnellement adapté aux dimensions des spires hélicoïdales (Z) du soufflet (9) pour une régulation continue de volume de l'espace intérieur (9a) du soufflet élastique (9) par l'ajustement approprie du nombre accessible de spires hélicoïdales libres (Z) du soufflet élastique (9), l'écrou de réglage (8) étant encastré sans possibilité de déplacement longitudinal par rapport à la surface extérieure du soufflet élastique (9) et par rapport au corps (1) mais avec la possibilité de rotation par rapport à la surface du soufflet élastique (9) autour de l'axe longitudinal du soufflet (9), qui coïncide avec l'axe de l'écrou de réglage (8), en outre ledit filetage intérieur (8a) comporte une saillie (8b) du filetage.

4. Dispositif de dosage (D) selon l'une des revendications 1 à 3, **caractérisé en ce que** le filetage intérieur (8a) de l'élément de régulation sous forme d'un écrou de réglage (8) ne comprend qu'une spire, de préférence une spire incomplète, s'étendant approximativement sur moins de 360°.

5. Dispositif de dosage (D) selon l'une des revendications précédentes 1 à 4, **caractérisé en ce que** l'extrémité d'entrée (2) et l'extrémité de sortie (3) sont équipées d'éléments d'accrochage (7) faisant saillie en direction de l'axe d'ouverture de raccordement (11) de leurs surfaces de base respectives, de ce côté du corps (1) dans lequel est située l'ouverture de raccordement (11) avec la bride (le) fixé au corps (1).

6. Dispositif de dosage (D) selon la revendication 5, **caractérisé en ce que** les éléments d'accrochage (7) sont conformés de manière à être situés à une certaine distance à la fois de la surface latérale face à eux du corps (1) et de la surface de bride (le), de sorte qu'un certain espace de décantation (7a) est ainsi délimité et déterminé.

7. Dispositif de dosage (D) selon la revendication 6, **caractérisé en ce que** les éléments d'accrochage (7) sont conformés pour immobiliser le mouvement axial de coulissement de l'élément de régulation sous forme d'un écrou de réglage (8) par rapport au corps (1).

8. Dispositif de dosage (D) selon l'une des revendications 1 à 6, **caractérisé en ce qu'**entre la face frontale de la bride extérieure (1c) du corps (1) et la saillie (8b) du filetage intérieur (8a) de l'élément de régulation sous forme d'un écrou de réglage (8) un espace de régulation (8d) est créé pour accueillir une certaine partie du nombre de spires hélicoïdales (Z) formant les plis (F) du soufflet élastique (9) lors de la rotation de l'écrou de réglage (8).

9. Dispositif de dosage (D) selon l'une des revendications 1 à 8, **caractérisé en ce que** dans l'ouverture de raccordement (11) du corps (1) sont disposés des éléments de vanne, de préférence sous forme d'une vanne d'entrée (15) et d'une vanne de sortie (16).

10. Dispositif de dosage (D) selon l'une des revendications 1 à 9, **caractérisé en ce que** dans la surface latérale de paroi du corps (1), face à l'ouverture de raccordement (11) est prévu un évidement (20) avec les parois inclinées sous un certain angle et convergentes vers l'intérieur, par exemple en section en V, lesquelles parois d'évidement (20) divisent l'espace intérieur (1a) du corps (1) en deux sections distinctes constituant, respectivement, une ouverture partielle (1.1a) et une ouverture partielle (1.1b).

11. Dispositif de dosage (D) selon la revendication 10, **caractérisé en ce que** l'ouverture partielle (1.1a) est reliée à l'extrémité d'entrée (2) et en communication fluidique avec son ouverture d'entrée (2a) d'un côté et à travers l'élément de vanne (15), situé dans la partie d'ouverture de raccordement (11) avec l'espace intérieur (9a) du soufflet élastique (9) de l'autre côté, tandis que l'ouverture partielle (1.1b) est en communication fluidique par intermédiaire de l'élément de vanne (4) avec l'ouverture de sortie (3a) de l'extrémité de sortie (3a) d'une part, et d'autre part par intermédiaire de la vanne de sortie (16) avec l'espace intérieur (9a) du soufflet élastique (9).

12. Dispositif de dosage (D) selon l'une des revendications 1 à 11, **caractérisé en ce que** sur la surface extérieure de l'élément de régulation, de préférence sous forme d'un écrou de réglage (8), une échelle appropriée est placée indiquant le volume dosé en unités définies, de préférence en millilitres, de préférence sous forme des nombres ou de chiffres, par exemple 2, 4, 6, 8, 0, qui indiquent le changement de volume, de préférence avec en plus des marquages auxiliaires appliqués sur les plis particuliers (F) du soufflet sous forme des spires hélicoïdales (Z).

13. Dispositif de dosage (D) selon l'une des revendications 1 à 12, **caractérisé en ce que** sur la surface extérieure du soufflet élastique (9) ou de la bride (le) du corps (1) sont appliqués des marquages supplémentaires.

14. Dispositif de dosage (D) selon l'une des revendications 1 à 13, **caractérisé en ce que** le soufflet élastique (9) est un soufflet configuré sous forme d'un solide de révolution, de préférence avec un contour cylindrique et un diamètre constant, ainsi qu'une surface extérieure latérale sous forme de plis conformés, de préférence, sous forme de spires hélicoïdales (Z) ou alternativement de plis circulaires (F).

15. Dispositif de dosage (D) selon l'une des revendications 1 à 14, **caractérisé en ce que** l'élément de régulation, de préférence sous forme d'un écrou de réglage (8) pourvu d'un filetage intérieur (8a), présente un autofreinage en mouvement de rotation par rapport au soufflet élastique (9) et/ou à la bride (le), en particulier par rapport aux spires hélicoïdales (Z) et aux plis (F) du soufflet élastique, cet autofreinage est obtenu soit sur la base du choix de matériau des deux éléments coopérants, soit sur la base du couplage de la forme et du couplage dimensionnel de ces éléments.
